# EUROPEAN PATENT APPLICATION

(11) **EP 3 597 622 A1**
(43) Date of publication of application: **22.01.2020**
(21) Application number: 19186999.9
(22) Date of filing: 18.07.2019
(51) Int. Cl.: C05D 9/00, C05G 3/00, C05F 7/00

(54) **A BENTONITE-CONTAINING SOIL IMPROVER**

(30) Priority: 20.07.2018 BE 201805529; 06.08.2018 BE 201805555; 27.03.2019 BE 201905193
(71) Applicant: RDL bvba, 3740 Bilzen (BE)
(72) Inventor: Hendrikx, Ronny, 3740 Bilzen (BE)
(74) Representative: Brantsandpatents bvba

(57) **Abstract**

In a first aspect, the invention relates to a method for the production of a soil improver based on a bentonite-containing derivative of a drilling mud. In particular, the derivative is split off from a coarser fraction of the drilling mud. In a second aspect, the invention relates to a soil improver as such.

## Description

### TECHNICAL DOMAIN

The invention relates to soil improvers. The invention also relates to the further processing of derivatives of a bentonite-containing drilling mud.

### STATE OF THE ART

In directional drilling, a so-called "mud shield" is often used. Thereto, a bentonite-containing drilling suspension is pumped through the drill rod toward the drill face. There, the suspension is mixed with excavated soil into a drilling mud. Subsequently, the drilling mud flows along the outside of the drill rod to the entry point or exit point of the drilling, in which they discharge the excavated soil. The drilling mud forms a mud shield which lubricates the drill rod, and which stabilizes the bore.

Moreover, a part of the released drilling mud is sometimes purified for re-use. For example, it is led in a first step through a sieve, in which a coarse fraction (> 4 mm) of mainly gravel, peat soil and clay balls is split off. Further purification (e.g. via cycloning and/or centrifuge) leads to an enriched bentonite residue that, possibly supplemented with water and pure bentonite, can be re-used as a drilling suspension. Processes are known in which such re-usable bentonite residue is obtained by means of amongst other things a cycloning separation of approximately 25 µm. Other fractions with a lower content of bentonite, and/or with a too high dilution with other fine particles are discharged and dumped, in the form of bentonite-containing sludge.

Apart from the above-mentioned, bentonite can be used as a soil improver, for improving the soil quality.

CN 107 032 933 describes, for example, a soil improving agent with a content of 40% to 45% of bentonite. Other components are straw, volcanic ashes, fermented cow manure, earth worms and linseed residue.

Furthermore, EP 2 209 757 describes a solid improver with a water-swelling material matrix based on an organic polymer. This is supplemented with inorganic, solid particles, for example with bentonite particles.

However, bentonite is an expensive raw material. Soil improvers with a high content of bentonite are therefore barely or never applied in a professional context. The present invention tries to solve one or more of the above-mentioned problems. Thereby, the invention aims for a cheaper, high-performing, bentonite-containing soil improver. Preferably, this soil improver can be fabricated with a composition that is reproducible and/or that can be controlled easily.

US 2005 039 656 describes another method for the local new use of a drilling mud, on the drilling site itself. The drilling mud obtained in drilling is mixed on the site with compost, with organic fertilizers and with present surface soil. It is tried to approach the characteristics of the original surface soil as good as possible. The product can be spread on the drilling site itself. In particular, it is no longer necessary to transport the drilling mud, away from the drilling site.

Finally, US 2015 197 459 also describes the processing of a drilling mud. The drilling mud is thereto analysed thoroughly. Based on that, other diverse components (compost, organic fertilizers, ...) are still added.

### SUMMARY OF THE INVENTION

In a first aspect, the invention relates to a method of claim 1, for the production of a soil improver based on a bentonite-containing derivative of a drilling mud. Thereby, the said derivative is applied as, and/or processed in a bentonite-containing soil improver.

The invention thus provides for the re-use of bentonite from drilling slurries (= a typical waste product of soil drillings). Such a soil improver would at least be capable of enlarging the moisture storage capacity of the soil, as well as preventing the flushing away of minerals. It is important that in a soil drilling, the excavated soil also comprises own lutum parts and silt parts. These parts are thus also present in the resulting drilling mud. Preferably, such parts are at least partially included in the above-said derivative of the drilling mud. They further contribute to the soil-improving effect of the soil improver. The present use allows to still use these particles, instead of having to remove and dump them at a high cost. In particular, said derivative comprises a sludge fraction of the drilling mud, and the method provides for a splitting off of the derivative from a coarser fraction of the drilling mud. For example, it is about a coarser sand fraction or sand-gravel fraction. This is particularly advantageous, because the derivative is thereby enriched with soil-improving lutum parts, silt parts and other additives from the excavated soil. The civil unstable sludge fraction (usually the reason why drilling slurries as a whole may only be discharged in special basins) thus get a new, useful application. The coarser fraction has only a limited or no useful soil-improving effect. However, this fraction is civilly stable. It thus easily finds a new destination (e.g. it can more easily be dumped). A soil-improver with a high concentration of soil-improving components moreover allows a more efficient transport and a more efficient spreading.

In a further or alternative embodiment of claim 8, the soil-improver further also comprises one or more humus components. Such humus components, in combination with bentonite (and possibly other lutum parts) in the soil-improver, can form a clay-humus complex, with a positive synergistic impact on the soil quality.

In a second aspect, the invention relates to a bentonite-containing soil improver of claim 10. Possibly, the soil-improver is obtained by applying the method of the first aspect.

### DETAILED DESCRIPTION

The invention relates to a method for producing a bentonite-containing soil improver, and a soil improver as such.

Unless otherwise specified, all terms used in the description of the invention, including technical and scientific terms, shall have the meaning as they are generally understood by the worker in the technical field of the invention. For a better understanding of the description of the invention, the following terms are explained specifically.

"A", "an" and "the" refer in the document to both the singular and the plural form unless clearly understood differently in the context. "A segment" means for example one or more than one segment.

When "approximately" or "about" are used in the document together with a measurable quantity, a parameter, a period or moment, etc., variations of +/-20% or less, preferably +/-10% or less, more preferably +/-5% or less, still more preferably +/-1% or less, and even still more preferably +/-0.1% or less than and of the cited value are meant, as far as such variations apply to the invention that is described. It will however be clearly understood that the value of the quantity at which the term "approximately" or "about" is used, is itself specified.

The terms "include", "including", "consist", "consisting", "provide with", "contain", "containing", "comprise", "comprising" are synonyms and are inclusive or open terms that indicate the presence of what follows, and that do not exclude or prevent the presence of other components, characteristics, elements, members, steps, known from or described in the state of the art.

The citation of numeric intervals by means of end points includes all integers, fractions and/or real numbers between the end points, including these end points.

Throughout this document, the "drilling mud" can be seen as the material flow that is released at the entry point (and optionally also at the exit point) of the drilling.

Types of soil can amongst other things be classified based on their particle size composition, in mass percent of the mineral fraction. A possible classification, applicable in large parts of Belgium and the Netherlands, is based on the following classes of texture of particle sizes: "lutum" (parts with a diameter smaller than 2 µm), "silt" (parts between 2 µm and 63 µm), "sand" (parts between 63 µm and 2 mm) and "gravel" (parts larger than 2 mm). For example, based on its amount of lutum, a type of soil can be referred to as "heavy clay" (>50%), "moderately heavy clay" (35-50%), "light clay" (25-35%), "heavy sandy clay" (17,5-25%), "moderately light sandy clay" (12%-17,5%) and "very light sandy clay" (8-12%). Types of soil with a lower content of lutum are for example classified based on their content of silt. Still other appropriate systems of classification are known by the skilled worker.

In accordance with the above-mentioned, "sand" is a sediment that is mainly composed of parts with a diameter between 63 µm and 2 mm. On the other hand, "clay" is mainly composed of small parts, of less than 2 µm. "Bentonite" is a natural type of clay. Depending on the dominant element, bentonite can more specifically be referred to as "potassium bentonite", "sodium bentonite", "calcium bentonite" and "aluminium bentonite". In particular, sodium bentonite fiercely swells when moistening it, in which the material can absorb its own amount of water several times. It can also form a jelly suspension. The use of bentonite for drilling slurries is amongst other things based on these characteristics.

Next to the mineral fraction, an agricultural soil typically also contains a fraction of organic agents, also referred to as "humus". This arises from the decomposition of vegetable and animal material. Based on the chemical extractability, humus is often subdivided into three so-called "humus components": humine, humus acid and fulvo acid. Sandy agricultural soils can comprise 3-6% of organic agents. For clayey agricultural soils, this is 1-6% of organic agent.

A "soil improver" is a substance or composition ensuring, when being applied, an improvement of the quality thereof, and preferably in the long term. Soil improvers are known for increasing the moisture storage capacity of the soil, for preventing the minerals to flush away, for reducing the surface sealing sensitivity, for increasing the amount of organic agents, for influencing the pH and/or for making the soil more resistant to structural deterioration. Soil improvers for these and other applications are known by the skilled worker. In particular, soil improvers are not only used for improving the agricultural quality of the soils; they are also used for lawns, in parks, on sports and recreational fields. The invention is not limited to any of these.

In a first aspect, the invention relates to a use of a bentonite-containing derivative of a drilling mud. In particular, the said derivative is applied as, and/or processed in a bentonite-containing soil improver. Optionally, the resulting soil improver contains drilling additives that are characteristic for the drilling suspension. However, this is not necessarily the case.

As said above, sand is mainly composed of particles with a grain size between 63 µm and 2 mm. Typically, it is about small rock blocks being formed as a result of erosion. Sandy soils have a good porosity. A disadvantage is that, on the other hand, they have a low moisture storage capacity, and that minerals and similar typically easily flush away from sandy soils. However, also in muddy soils and even in clayey soils, minerals can significantly flush away.

Clay is mainly composed of small lutum parts (< 2 µm) that have been formed chemically. These parts have a plate structure with a negatively loaded surface. As a result, clay soils are better capable of maintaining water and dissolved minerals. Thus, minerals do not flush away so quickly, and they remain available for the plants for a longer period. In general, clay soils are therefore more fertile than sandy soils. During dry periods, they are also better capable of holding water, i.e. they have a larger moisture storage capacity.

Bentonite is a natural type of clay with exceptional moisture storage capacities. In particular, bentonite can swell strongly when moistening it (especially sodium bentonite), and it is well capable of adsorbing ions (especially calcium bentonite). The invention now provides for the re-use of bentonite comprised in drilling slurries, which is a typical waste product of drillings. In particular, at least one bentonite-containing derivative of a drilling mud is re-used as, and/or processed in a bentonite-containing soil improver. In a possible embodiment, the drilling mud is used as a whole, directly as a soil improver. In other possible embodiments, only parts of the drilling mud are used as a soil improver, or at least processed together with additives into a soil improver. First of all, the invention is not limited to any of these.

Preferably, only a part of the drilling mud is further processed into a drilling mud. Preferably, that part only comprises a sludge fraction of the drilling mud. Another coarser fraction is split off therefrom and is not processed in the soil improver. Optionally, the derivative is separated from the coarser fraction, by means of a draining sieve (e.g. separation by particle size of approximately 250 µm). Alternatively and moreover, the derivative is separated from the coarser fraction, by means of cycloning (e.g. separation by particle size of approximately 63 µm). First of all, the invention is not limited to any of these. Note that at a separation by a particular particle, at least two separated flows arise, in which the coarser flow can however still comprise a small amount of finer particles and in which the finer flow can however still comprise a small amount of coarser particles. Preferably, in both cases, it is about less than 5% (based on the total dry weight), more preferably less than 4%, more preferably less than 3%, more preferably less than 2% and most preferably less than 1%.

Preferably, said bentonite comprises at least sodium bentonite or at least natrium-activated bentonite, for example obtained by sodium activation of calcium bentonite. Indeed, for natrium-bentonite and natrium-activated bentonite, the strongest improvement of the soil was determined.

Such a soil improver would at least be capable of enlarging the moisture storage capacity of the soil, as well as preventing the flushing away of minerals. The soil improver can be applied to any soil (e.g. to clayey soils, mud soils, sandy soils and/or other soils). The largest effect was however registered on sand and muddy sand, considering the limited moisture storage capacity of these soils.

In the past, drilling mud was considered as a waste product which had to be drained and dumped. The present invention allows to re-use this relatively cheap waste product, which is available in large quantities, for improving the soil. Consequently, the primary sources of bentonite can be better used. Moreover, the bentonite which is used in drillings, is typically of a very good quality. For example, it does not comprise any toxic contaminations, so that the soil quality would not be polluted when drilling. This is in particular the case of a drilling in drinking-water areas. Moreover, when drilling an in theory already pure soil, the resulting drilling mud will also not contain any contaminations. Preferably, the soil improver can thus be used without any limitation on any soil, without the risk of contamination. Optionally, possible contaminations are split off from the drilling mud, or eliminated by means of corresponding purification processes.

According to a further or alternative embodiment, the soil improver is used in a dose of at least approximately 2 ton of bentonite per hectare, preferably more than 2 ton/ha, more preferably more than 3 ton/ha and more preferably more than 4 ton/ha: for example approximately 5 ton/ha, approximately 10 ton/ha or approximately 15 ton/ha.

It is important that in a soil drilling, the excavated soil also comprises its own lutum parts and silt parts. These parts are thus also present in the resulting drilling mud. As a result of their size and/or composition, these parts will, when added to the soil improver, further contribute to its effect (increased moisture storage capacity, better holding of minerals,...). In a possible embodiment, said derivative of the drilling mud comprises at least a part of the lutum and/or silt parts, coming from the excavated soil. The present use thereby allows to still use these particles, instead of having to remove and dump them at a high cost. In a preferred embodiment, the derivative comprises a sludge fraction of the drilling mud. This sludge fraction largely comprises all lutum parts and silt parts of the drilling mud.

In a possible embodiment, said derivative also comprises further "additives", coming from the excavated soil. For example, when drilling in calcareous soils, the drilling mud will contain many calcium-containing compounds. Preferably, at least a part of these compounds is comprised in said derivative. The resulting soil improver then has a chalk effect, as has been described below. According to another example, when drilling in e.g. peat-rich areas, the drilling mud will also contain a large part of organic agents. Preferably, at least a part this organic agent is also comprised in said derivative.

According to a further or alternative embodiment, the derivative comprises at least a sludge fraction. Coarser fractions of e.g. gravel have a little more civil stability, so that they can be left behind at the site of the drilling. For sludge fractions (of small particles), this is however not the case. Typically, they have to be dumped in special basins. Moreover, the sludge fractions usually possess a larger amount of bentonite. It is thus advantageous that the derivative comprises one or more such sludge fractions. The term "sludge" and its derived terms, as used here, refer to a water-saturated mixture of mainly lutum and/or silt parts.

According to a further or alternative embodiment, said derivative is split off from a coarser fraction of the drilling mud. Thereby, the derivative is enriched with smaller parts (e.g. lutum and/or silt), which contribute to the effect of the soil improver.

According to a non-limiting example, a possible coarser gravel fraction (> approximately 2 mm) was split off from the drilling mud. Said derivative is than (coming from) the residual part of the drilling mud. Preferably, the derivative also comprises at least a part of the lutum, silt and/or sand fractions, coming from the drilling mud.

According to another non-limiting example, a possible coarser gravel fraction (> approximately 63 mm) was split off from the drilling mud. Said derivative is than (coming from) the residual part of the drilling mud. Preferably, the derivative also comprises at least a part of the lutum and silt fractions, coming from the drilling mud. The invention is not limited to any of these. Alternatively, for example, the derivative can comprise one or more coarser fractions of the original drilling mud.

Preferably, sand fractions and gravel fractions (or a mixed coarser fraction) are always largely split off, for example for 95 percent in mass or more. More preferably, these split off fractions are subjected to an environmental analysis. For example, they can then be discharged as a raw material or building material.

According to a further or alternative embodiment, the derivative is split off from a water fraction of the drilling mud. An advantage is that the derivative then comprises a larger percentage in weight of bentonite, with respect to the total weight. The splitting off of a water fraction is for example possible by means of an optional flocculation, combined with pressing and/or filtration. According to a further embodiment, the derivative is obtained through the possible flocculation and moreover pressing and/or filtration of a sludge fraction.

Between drilling slurries of two different drillings, and even between successive batches of drilling mud at the same drilling, important differences can arise as to the composition. For example, the composition of the obtained drilling mud can be dependent on the excavated soil, which in turn varies according to a change in soil layers. Of course, this also causes variations in the composition of the resulting drilling mud. Moreover, the composition of the drilling suspension, the drilling mud and/or of the excavated soil should be monitored regularly or even continuously. This allows to optimally control the drilling (e.g. by changes in the viscosity of the drilling suspension). On the one hand, this ensures that the composition of the obtained drilling mud can be estimated at least partially. On the other hand, this adjustment of the drilling process causes an additional variation in the obtained drilling mud, e.g. as to the amount of bentonite.

According to a further or alternative embodiment, the soil improver comprises two or more batches of bentonite-containing derivatives of drilling slurries. The present invention thereby allows to fabricate a soil improver with a composition that is reproducible and/or that can be regulated well. This, by a well-thought-out combination of different batches of drilling mud with an at least partially known composition. In a non-limiting example, a generic soil improver can thereby be composed, with a composition which is as constant as possible.

According to a further or alternative embodiment, said batches are selected, taking into account their composition, with a targeted crop and/or with a target soil. Optionally, one thereby takes into account an analysis of the soil where the soil improver will be used. In a non-limiting example, a custom-made soil improver can thereby be composed, with amounts of different components situated close to the desired values. Optionally, the composition is further finetuned by added pure components.

According to a further or alternative embodiment, the soil-improver further also comprises one or more additives. This allows to further extend the soil-improving effect.

According to a further or alternative embodiment, said additives comprise one or more humus components. For example, the additives can comprise humine, humus acids and/or fulvo acids. Addition thereof can stimulate the absorption of nitrogen and phosphor by plants. A possible synergistic effect of the bentonite (and possible other lutum parts) with the added humus components is also important; together they can form a clay-humus complex. Such complexes stabilize the soil against amongst other things erosion. Clay-humus complexes also ensure a fresher soil and they stimulate the soil life. The mineral nutrients are also better maintained. In general, this results in a larger fertility of the soil.

According to a further or alternative embodiment, said additives comprise chalk agents. Such chalk agents are amongst other things comprised in agricultural chalk, known by the skilled worker. According to a non-limiting example, it relates to a mixture comprising calcium carbonate, calcium oxide and/or calcium hydroxide. The effect of chalk is that the acidity of the soil decreases, as a result of which the soil becomes fresher. Thereby, the souring effect of acidic precipitation and of some artificial fertiliser can also be countered. As said above, the derivative of the drilling mud can also already contain chalk agents.

According to a further or alternative embodiment, said additives comprise herbal mixture.

According to a further or alternative embodiment, said additives comprise mineral fertilizers or artificial fertilizers. Possibly, the additives comprise nitrogen-containing (N), phosphor-containing (P) and/or potassium-containing (K) fertilizers. Possibly, the additives comprise mixed fertilizers, for example any mixture of the preceding such as NPK fertilizers, NP fertilizers and/or PK fertilizers, according to desired/adjusted ratios. Such mixed fertilizers play an important role in the agriculture and horticulture. Addition of fertilizers - in general - to the soil improver allow to already provide for the need for manure for the following culture period. Together with the other components of the soil improver, they can be spread in one and the same working passage. In a possible embodiment, the manure is added, taking into account a targeted crop and/or a targeted soil.

According to a further or alternative embodiment, said additives comprise "biological stimulants". It is about active molecules and/or micro-organisms influencing natural processes in the soil and/or in plants. Thereby, they help the plant to absorb nutrients. In this way, they have a positive influence on the growth and the development of the crop. Additionally, biological stimulants can increase the resistance of the plant against different stress factors, for example against drought. Preferably, the additives comprise biological stimulants increasing the resistance of plants against drought. These biological stimulants thereby show a synergistic effect (as to the drought resistance of crop and soil), when combined with the bentonite in the soil improver.

According to a further or alternative embodiment, said additives comprise root-stimulating agents. They have a synergistic effect with the humus and fulvo acids.

According to a further or alternative embodiment, said additives comprise biological components such as biological pesticides. Preferably, the soil improver can be composed completely of biological components. More preferably, the present invention allows to compose both biological and non-biological soil improvers.

According to a further or alternative embodiment, said additives also comprise trace elements.

In an agricultural context, not only the optimally administered amount of bentonite, but also amongst other things the optimal acidity and the optimally administered amount of humus components strongly depend on the type of soil and the targeted crop. According to a further or alternative embodiment, at least one additive is comprised in a particular amount, which amount is determined based on a composition of said derivative or derivatives, based on a targeted crop and/or based on a targeted soil. This allows to control the moisture storage capacity, the acidity and the availability of nitrogen and phosphor very precisely, adjusted to the crop / target soil.

According to a further or alternative embodiment, said additives comprise nutrients, minerals and/or trace elements that are necessary for specific crops in the vegetable and fruit culture, or in certain types of soils. They are then preferably added, taking into account a targeted crop and/or a targeted soil.

According to a further or alternative embodiment, said additives also comprise debris, e.g. soil debris, stone debris and/or concrete debris. Preferably, it is about fine debris, with a diameter of maximum 2 mm, more preferably smaller than 2 mm. Debris is a cheap filling agent. As a result, the soil improver can be spread more equally.

In a second aspect, the invention relates to a bentonite-containing soil improver. Optionally, the soil-improver is obtained by means of the method of the first aspect. In particular, the soil improver comprises a bentonite-containing derivative of a drilling mud. Here, the same characteristics can be adopted, and here, the same advantages can be repeated.

In a preferred embodiment, the soil improver comprises at least 10% of lutum, based on the total weight of dry residue, more preferably at least 25%, more preferably at least 40%, for example approximately 40%, approximately 45%, approximately 50%, approximately 55%, approximately 60%, or approximately 65%. Preferably, minimum 1% thereof is bentonite/Montmorillonite, more preferably between 1% and 25%, preferably between 1% and 15%, for example between 1% and 12%. Preferably, the total amount of lutum (thus of bentonite and other clay parts) is at least 20%.

According to a possible embodiment, the soil improver has an amount of lutum of at least 1% and maximum 100%, more preferably maximum 90%, more preferably maximum 80%, more preferably maximum 70%, more preferably minimum 2%, more preferably minimum 3%, more preferably minimum 4%, more preferably minimum 5% and more preferably minimum 10%. According to a non-limiting embodiment, the soil improver comprises between 5% and 40% of lutum, based on the total weight of dry agent. Montmorillonite (a main component of bentonite) preferably makes up at least a part of this amount of lutum. However, more preferably, at least another part of the lutum is coming from the excavated soil when drilling, rather than from the bentonite in the drilling suspension. According to a possible embodiment, the soil improver has an amount of bentonite/amount of Montmorillonite of at least 1% and maximum 100%, more preferably maximum 80%, more preferably maximum 60%, more preferably maximum 40%, more preferably maximum 20%. According to a non-limiting embodiment, the soil improver comprises between 1% and 12% of bentonite, based on the total weight of dry agent.

According to a further or alternative embodiment, the sand-gravel fraction is negligible. Preferably, the sand-gravel fraction amounts to maximum 5%, based on the total weight of dry residue, more preferably less than 5%, for example approximately 4%, approximately 3%, approximately 2%, approximately 1% or less than 1%. Preferably, the sand-gravel fraction is less than 1%.

According to a possible embodiment, it relates to a biological soil improver. According to a further or alternative embodiment, the soil improver is essentially liquid. An advantage is that also the water, coming from the drilling suspension, can thereby be re-used. In particular, that water should not be discharged or purified. Such a soil improver in liquid state could be administrated in a similar way as semiliquid manure. Possibilities are surface fertilisation (e.g. via a spreading boom with skids, slurry injector or drag-hose injector). Thereby, it is not necessary to dry, filter and/or press the drilling mud, into an essentially solid shape. Optionally, stabilizers (e.g. thickening agents) are also added to stabilize the soil improver, e.g. for preventing the sagging of a solid fraction.

According to a further or alternative embodiment, the soil improver is essentially solid, e.g. granular or powdery. An advantage is that the amount of bentonite is higher. Also, the soil improver can then be transported at a relatively low cost, for the same amount of bentonite.

According to a further or alternative embodiment, the soil-improver further also comprises one or more humus components, chalk agents, fertilizers, an herbal mixture and/or trace elements. Thereby, the same advantages as above can be repeated.

In a further aspect, the invention also relates to a use of a bentonite-containing derivative of a drilling mud, in which the derivative is applied as, and/or processed in a bentonite-containing soil improver. Preferably, the use is in accordance with the above-mentioned method. Thereby, the same characteristics can be adopted, and thereby, the same advantages can be repeated.

In the following, the invention will be described by means of non-limiting examples illustrating the invention, and not meant to be interpreted as limiting the scope of the invention.

### Example 1

According to a non-limiting example, the drilling mud obtained in a drilling is composed of approximately 70% of water and approximately 10% of bentonite (with respect to the total weight). Now, the drilling mud is pressed, with separation of pressing water. The pressing water is purified and subsequently discharged. The residual, essentially solid fraction comprises approximately still the same absolute amount of bentonite. This fraction is now used directly as a soil improver, at an amount of approximately 15 ton of bentonite per hectare.

### Example 2

According to a non-limiting example, the present soil improver comprises approximately 13% of clay (including bentonite) and approximately 54% of mud, with respect to the total weight. The residual components comprise sand, gravel and water. When administered in a dose of 1.5% on a sandy soil (with a sand fraction of approx. 80%), the moisture storage capacity increases with approx. 2%.

In an alternative example, the sand and gravel fractions are separated by means of filtration, centrifuge and/or cycloning.

### Example 3

According to a non-limiting example, the present soil improver is essentially liquid. It has an amount of bentonite of 10-15% (with respect to the total amount of dry residue), supplemented with humus acids and fulvo acids, as well as a concentrate of herbal extracts.

### Example 4

According to a non-limiting example, the present soil improver is solid, more in particular granular of powdery. The soil improver comprises approximately 10-15% of bentonite (with respect to the total amount of dry residue), with supplemented thereto granulates of humus acids and fulvo acids, as well as a concentrate of different herbal extracts.

### Example 5

According to a non-limiting example, the drilling mud is transported from one or more drilling sites to a central processing site. Transport means used therefore typically provide a volume between 5 and 30 m³ per vehicle, for example approximately 8 m³ per vehicle, approximately 10 m³ per vehicle, approximately 12 m³ per vehicle, approximately 14 m³ per vehicle, approximately 16 m³ per vehicle, approximately 18 m³ per vehicle, approximately 20 m³ per vehicle (or any other value in-between).

Inherently, this transport leads to a division of the drilling mud into "transport batches" with limited size (between 5 and 30 m³ each).

At the processing site, the drilling mud is first led through a sand separator. Thereto, the drilling mud is first trilled over a sieve cloth (with separation of essentially a gravel fraction). Subsequently, another separation takes place of particles with a particle size > 63 µm, by means of cloning. Coarser fractions are thus split off from the drilling mud. Such fractions have a high civil stability. The coarser fractions can thus simply be dumped on piles, at a low cost. Alternatively, the coarser fraction (possibly. after environmental analysis) can be discharged as a raw material or construction material. In particular, no special basin should be used therefore.

The residual fraction can be seen as a bentonite-containing derivative of the drilling mud. Typically, it is about a liquid fraction (also: sludge fraction). Next to bentonite, the liquid fraction also comprises water and all sorts of fine/dissolved components coming from the excavated soil (e.g. lutum parts, silt parts, calcium-containing compounds, humus components, ...). Such a fraction is civilly unstable, as a result of which it cannot simply be dumped on piles. Generally, complete drilling mud (thus the coarser fraction + the liquid fraction) is considered as an unstable waste product, that can only be stored in a specially designed basin. The present invention thus provides for the separation of the (stable) coarser fraction, and a separate processing of the (unstable) liquid fraction in or into a bentonite-containing soil improver.

On the one hand, it is particularly advantageous that the coarser fraction which is easy to re-use is already separated in a first step. At pollution (e.g. with mineral oil), the coarser fraction is indeed transferred to a recognized processor.

The same goes for the liquid fraction. The detection of possible contaminations in the liquid fraction takes place at at least two different levels. After separation, the liquid fraction is first stored in a storage tank with limited size (between 10 and 100 m³, e.g. approximately 40 m³). Thereby, "intermediate batches" are formed, with that same volume. On each intermediate batch, an indicative test is subsequently realized. Thereby, mineral oil is detected. At a positive result, the intermediate batch is subjected to a complete analysis. Such a complete environmental analysis is however too expensive/slow to carry out for each intermediate batch. When the result is also positive at the analysis, the whole intermediate batch must be transferred to a recognized processor. In case of a negative result for the test or analysis, the intermediate batch is transferred to a storage tank with bigger size (between 100 m³ and 500 m³, e.g. approximately 250 m³). Thereby, "master batches" are formed, with that same volume. Each master batch is subjected anyway to a complete environmental analysis. In case of a positive result, the master batch is transferred to a recognize processor. In case of a negative result, the master batch is transferred to a mixing tank, for processing into a soil improver.

By realizing a previous, indicative test on smaller intermediate batches, it is avoided that a master batch would be contaminated completely by one single contaminated intermediate batch.

On the other hand, it is particularly advantageous that the liquid fraction which is difficult to re-use, is processed into a soil improver. Indeed, this liquid fraction is enriched with fine particles and all sorts of additives, coming from the excavated soil. They have in themselves already a strong soil-improving effect. Moreover, another one or more humus components, chalk agents, fertilizers, herbal mixtures and/or trace elements are added. For example, it is about measured amounts of humus acids or organic agent. The final product (= the soil improver) is mixed and discharged.

In case of liquid discharge, the liquid product is simply pumped to an appropriate means of transport (e.g. a tanker). This product is used as a soil improver - see example 6 below. In case of solid discharge, the liquid product is supplemented with appropriate flocculates. Optionally, poly electrolyte polymers are used therefore. Via a press (e.g. a chamber filter press or sieve band press), the water fraction can subsequently be driven/pressed out of the liquid product. The obtained filter cakes can be spread as a soil improver - see example 7 below. The water fraction should indeed be discharged and processed in an appropriate way.

### Example 6: analysis of a sample of soil improver (solid discharge)

Table 1 below shows the mass part (in percent in weight, based on the total weight of the soil improver) of the water content, the dry residue, the organic agent, the ash residue and the clay content of a monster of solid soil improver.

The water content and the dry residue are determined in accordance with the standard CMA/2/II/A.1 (Belgian Official Gazette 27 of January 2012). There, a drying process is described at 105°C. The "ash residue" is determined in accordance with the standard CMA/2/II/A.2 (Belgian Official Gazette 27 of January 2012). There, an ashing process is described at 550C°, realized on the previously obtained dry residue. The amount of organic agent can be determined based on the ignition loss at the ashing process. The clay content in the ash residue is finally determined by means of the pipette method of Robinson-Kohn, with pipette system SP-1000 Analyser Skalar, in accordance with the standard CMA/2/II/A.6.

**Table 1: analysis of a soil improver (solid discharge)**

| **Substance** | **Mass part (%)** | **Mass part (%)** |
|---|---|---|
| | **(with respect to the soil improver)** | **(with respect to the dry residue)** |
| Water content | 44.0 | / |
| Dry residue | 56.0 | / |
| Organic agent | 13 | 23.2 |
| Ash residue (also sludge) | 43 | 76.8 |
| Clay content | 37.7 ± 20 | 66.1 |

The ash residue comprises clay. It is about both bentonite coming from the drilling suspension, and lutum coming from the excavated soil. The part of Montmorillonite (main component bentonite) in the soil improver is estimated at more than 2%. Moreover, the ash residue also comprises silt and possible oxides and salts. A coarser fraction of sand and gravel was separated from the drilling mud-sludge fraction. These components are thus not or barely present in the soil improver (e.g. only for less than 1%).

### Example 7: analysis of a sample of soil improver (liquid discharge)

Table 2 below shows the mass part (in percent in weight, based on the total weight of the soil improver) of the water content, the dry residue, the organic agent, the ash residue and the clay content of a monster of liquid soil improver. These variables are determined in the same way as in the example 6 above. The part of Montmorillonite (main component bentonite) in the soil improver is estimated at more than 1%.

**Table 2: analysis of a soil improver (liquid discharge)**

| **Substance** | **Mass part (with respect to the soil im prover)** | **Mass part (with respect to the dry residue)** |
|---|---|---|
| Water content | 68.3 | / |
| Dry residue | 31.7 | / |
| Organic agent | 7.7* | 24.3 |
| Ash residue (also sludge) | 24 | 75.7 |
| Clay content | 18.6 ± 9.8 | 58.7 |

| | | |
|---|---|---|
| * Some jurisdictions stipulate additional conditions, e.g. as to the minimum amount of organic agent in the soil improvers. In this context, it may also be necessary to add a larger amount of humus components. For example, in Belgium, it has been set by law that there must be a minimum content of 10% of organic agent, in order to be recognized as a soil improver. | | |

It will be understood that the present invention is not limited to the embodiments described above and that some adjustments or changes can be added to the described examples without changing the scope of the enclosed claims.

## Claims

1. A method for the production of a bentonite-containing soil improver based on a bentonite-containing derivative of a drilling mud, which derivative comprises a sludge fraction, **characterized in that** the sand fractions and gravel fractions are thereto split off from the drilling mud, and in whereby the derivative is coming from the residual part of the drilling mud.

2. The method according to the previous claim 1, whereby the coarser fractions with particle size > 63 µm are split off from the drilling mud, and whereby the derivative is coming from the residual part of the drilling mud.

3. The method according to any one of the previous claims 1 and 2, wherein the derivative is separated from a coarser fraction by means of a draining sieve, with a separation based on a particle size of approximately 250 µm.

4. The method according to any one of the previous claims 1-3, wherein the derivative is separated from a coarser fraction by means of cycloning, with a separation based on a particle size of approximately 63 µm.

5. The method according to any one of the previous claims, **characterised in that** furthermore, a water fraction is separated from the derivative.

6. The method according to the previous claim 5, wherein the water fraction is separated by means of flocculation and filtration.

7. The method according to any one of the previous claims, further comprising the combining of two or more batches of bentonite-containing derivatives of drilling slurries, which batches are selected, taking into account their composition, a target crop, and/or a target soil.

8. The method according to any one of the previous claims, **characterised in that**, furthermore, one or more additives are added.

9. The method according to the previous claim 8, whereby the additives comprise one or more humus components, chalk agents, herbal mixtures, mineral fertilizers, biological stimulants, root-stimulating agents and/or biological components.

10. The method according to the previous claim 9, **characterized in that**, at least one additive is added in a particular amount, which amount is determined based on a composition of said derivative or derivatives, based on a target crop, and/or based on a target soil.

11. Bentonite-containing soil improver, for example produced based on a bentonite-containing derivative of a drilling mud, which soil improver comprises at least 10% of lutum, based on the total weight of dry residue, of which between 1% and 12% of bentonite, and whereby the soil improver further still comprises one or more humus components, **characterised in that** the part of the sand-gravel fraction in the soil improver is negligible, and is preferably less than 1%.

12. The soil improver according to claim 11, whereby the part of lutum is at least 25%, based on the total weight of dry residue.

13. The soil improver according to any one of the claims 11-12, **characterised in that**, the soil improver is essentially liquid.

14. The soil improver according to any one of the claims 11-12, **characterised in that** the soil improver is essentially granular or powdery.

15. The soil improver according to any one of the claims 11-14, **characterized in that** the soil-improver further also comprises one or more humus components, chalk agents, fertilizers, an herbal mixture and/or trace elements.
